# EUROPÄISCHE PATENTSCHRIFT

(11) **EP 0 756 978 B1**
(45) Veröffentlichungstag und Bekanntmachung des Hinweises auf die Patenterteilung: **22.09.1999**
(21) Anmeldenummer: 96109760.7
(22) Anmeldetag: 18.06.1996
(51) Int. Cl.: B60T 17/00

(54) **Vorrichtung zur Visualisierung des aktiven Zustands eines Bremsregelsystems in Kraftfahrzeugen**
Device for optically indicating the activation of a brake control system in vehicles
Dispositif pour l'indication optique d'activation d'un système de contrôle de freinage pour véhicules

(30) Priorität: 02.08.1995 DE 19528408
(43) Veröffentlichungstag der Anmeldung: 05.02.1997
(73) Patentinhaber: Bayerische Motoren Werke Aktiengesellschaft, 80788 München (DE)
(72) Erfinder: Unterforsthuber, Jakob, 82216 Maisach (DE); Mitterer, Johann, 80807 München (DE)

(56) Entgegenhaltungen:
- DE-A- 3 002 279
- DE-A- 3 527 532
- DE-A- 4 235 690

## Beschreibung

Die Erfindung bezieht sich auf eine Vorrichtung zur Visualisierung des aktiven Zustands eines Bremsregelsystems in Kraftfahrzeugen.

Bisher ist bekannt, zur Visualisierung des aktiven Zustands eines Bremsregelsystems in Kraftfahrzeugen, insbesondere eines Antiblockierregelsystems (ABS) und/oder eines Antriebsschlupfregelsystems (ASC) mit Bremsregeleingriff, eine ohnehin für die Anzeige von Fehlern vorhandene Kontroll-Lampe getaktet anzusteuern. Eine aufblinkende Kontroll-Lampe zur Visualisierung des aktiven Zustands des Bremsregelsystems kann den Fahrer jedoch fälschlicherweise dazu veranlassen, einen Fehler im Bremsregelsystem zu vermuten.

Darüber hinaus ist bekannt, daß der aktive Zustand eines Bremsregelsystems durch den Fahrer haptisch, insbesondere in Form von Vibrationen am Bremspedal, erfaßbar ist. Dieses haptische Signal wird jedoch bei zukünftigen, rein elektronisch gesteuerten Bremsregelsystemen entfallen. Fehlt eine Anzeige des aktiven Zustands des Bremsregelsystems vollständig, könnte der Fahrer insbesondere bei sehr niedrigen Reibwerten den Eindruck bekommen, daß keine ausreichende Wirkung der Bremse vorliegt.

Aus der DE 30 02 279 A1 ist ein Verfahren zur Wiedergabe der bei einem Kraftfahrzeug wirkenden Bremskraft bzw. eintretenden Bremsverzögerung bekannt. Dabei werden die Umdrehungen der Fahrzeugräder ausgewertet. Daraus wird auf eine tatsächlich vorliegende Bremsverzögerung geschlossen. Die Bremsverzögerung wird in eine vorgegebene Skalierung eingeteilt, wobei man sich an einer maximal möglichen Bremsverzögerung als Höchstwert orientiert.

Bei bestimmten Fahrbedingungen kann die maximale Bremsverzögerung aufgrund eines niedrigeren Reibwerts zwischen Fahrbahn und Reifen nicht erreicht werden, so daß in einem solchen Betriebszustand nie ein maximaler Wert angezeigt werden kann. Der Fahrer wird darüber im unklaren gelassen, inwieweit er seine Bremsmöglichkeiten - auch durch den Einsatz eines Bremsregelsystems - ausgeschöpft hat.

Es ist Aufgabe der Erfindung, eine Vorrichtung eingangs genannter Art derart zu verbessern, daß der Fahrer zum einen nicht irritiert wird, zum anderen aber ausreichend über den durch das Bremsregelsystem beeinflußten Bremsvorgang informiert wird.

Diese Aufgabe wird durch die kennzeichnenden Merkmale des Patentanspruchs 1 gelöst.

Erfindungsgemäß ist eine vergleichende Anzeige einer der momentan maximal möglichen Bremskraft proportionalen Größe mit einer der tatsächlichen Bremskraft proportionalen Größe im sichtbaren Bereich des Fahrers angebracht.

Eine der Bremskraft proportionalen Größe ist beispielsweise die Bremskraft selbst, die daraus resultierende Verzögerung oder der daraus resultierende Bremsweg. Die momentan maximal mögliche Bremskraft bzw. die der momentan maximal möglichen Bremskraft proportionale Größe kann variabel in Abhängigkeit von Fahrbetriebsparametern bestimmt und angezeigt werden.

Die vergleichende Anzeige kann beispielsweise in Form von Zahlenwerten, Prozentsätzen oder als Balken ausgeführt sein.

Ergänzend kann ein zusätzliches optisches oder akustisches Signal abgegeben werden, wenn die der tatsächlichen Bremskraft proportionale Größe gleich der der momentan maximal möglichen Bremskraft proportionalen Größe ist.

Die vergleichende Anzeige kann jedoch auch in Form einer einzigen Information ausgeführt werden, die z. B. eine Differenzzahl oder eine Prozentzahl aussagt, wie nahe sich die der tatsächlichen Bremskraft proportionalen Größe an der der momentan maximal möglichen Bremskraft proportionalen Größe befindet.

Sind im Fahrzeug beispielsweise Abstandssensoren zur Erfassung des Abstands zum Vordermann vorhanden, kann auch eine vergleichende Anzeige des aus der momentan vorliegenden Bremskraft resultierenden Bremsweges mit dem zur Verhinderung eines Auffahrunfalles maximal zulässigen Bremsweges vorgenommen werden.

Eine vorteilhafte Weiterbildung der Erfindung ist der Gegenstand des Patentanspruchs 2.
Erfindungsgemäß wird die der momentan maximal möglichen Bremskraft proportionale Größe variabel in Abhängigkeit von dem momentan ermittelten Reifen-Fahrbahn-Reibwert bestimmt.
Zur Ermittlung des momentan vorliegenden Reifen-Fahrbahn-Reibwertes sind bereits verschiedene Verfahren bekannt. Beispielsweise kann eine zusätzliche Anzeige dieses Reibwertes vorgesehen sein.

Durch die erfindungsgemäße Anzeigevorrichtung wird verhindert, daß der Fahrer, insbesondere bei niedrigen Reibwerten, vermutet, daß die Bremswirkung unzureichend ist. Darüber hinaus wird der Fahrer informiert, wenn die der tatsächlichen Bremskraft proportionale Größe kleiner als die der momentan maximal möglichen Bremskraft proportionale Größe ist, daß durch eine Erhöhung der Bremskraft über das Bremspedal eventuell eine weitere Verzögerung möglich ist.

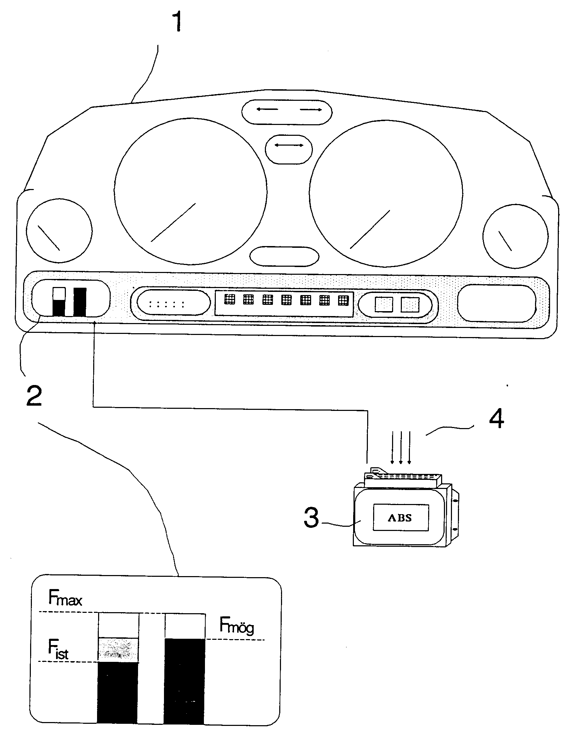

In der Zeichnung ist ein Ausführungsbeispiel der Erfindung dargestellt. Es zeigt eine vergleichende Anzeige der momentan maximal möglichen Bremskraft mit der tatsächlichen Bremskraft in Balkendarstellung.

In der einzigen Figur weist ein Instrumentenkombi 1 eines Kraftfahrzeugs eine Anzeigeeinheit 2 auf. Die Anzeigeeinheit 2 wird vom Steuergerät 3 eines ABS-Bremsregelsystems angesteuert. Das Steuergerät eines ABS-Bremsregelsystems erhält verschiedene Eingangssignale 4, wie z. B. die Fahrzeuggeschwindigkeit, ein Leistungsanforderungssignal und/oder die Drehzahlen sämtlicher Räder des Kraftfahrzeuges. In Abhängigkeit von den Eingangssignalen 4 des Steuergerätes 3 wird eine momentane maximal mögliche Bremskraft F_{mög} berechnet und auf der Anzeigeeinheit 2 als rechter ausgefüllter Balken dargestellt. Der linke ausgefüllte Balken der Anzeigeeinheit 2 stellt der momentan maximal möglichen Bremskraft F_{mög} die tatsächliche Bremskraft Fᵢₛₜ gegenüber, die ebenfalls beispielsweise durch das Steuergerät 3 in Abhängigkeit von den Eingangssignalen 4, die z. B. auch die auf das Bremspedal ausgeübte Betätigungskraft enthalten können, berechnet wird. Der graue Bereich des linken Balkens zeigt an, um welchen Anteil die tatsächliche Bremskraft für eine noch stärkere Verzögerung erhöht werden kann. Ergänzend kann auch eine absolute maximal mögliche Bremskraft Fₘₐₓ angezeigt werden, die jedoch beispielsweise nur bei optimalen Reibwerten erreichbar ist. Alternativ zur angezeigten Bremskraft kann als der Bremskraft proportionale Größe auch die Verzögerung oder der Bremsweg angezeigt werden. Wird beispielsweise der Bremsweg angezeigt, entspricht die der maximal möglichen Bremskraft proportionale Größe dem minimal möglichen Bremsweg. Wird dagegen die Verzögerung angezeigt, entspricht die der maximal möglichen Bremskraft proportionale Größe auch der maximal möglichen Verzögerung.

Gerade dann, wenn sich das Bremsregelsystem im aktiven Zustand befindet, liegt die maximal mögliche Bremskraft F_{mög} unterhalb der absoluten maximal möglichen Bremskraft Fₘₐₓ. Durch die erfindungsgemäße Anzeige nach dem Ausführungsbeispiel wird somit dem Fahrer zum einen der aktive Zustand des Bremsregelsystems und zum anderen die daraus resultierende maximal mögliche Bremskraft F_{mög} angezeigt. Durch den Vergleich mit der tatsächlichen Bremskraft Fᵢₛₜ wird entweder angezeigt, daß trotz des aktiven Zustands des Bremsregelsystems noch eine Erhöhung der tatsächlichen Bremskraft möglich ist (vgl. linker schwarz ausgefüllter Balken) oder daß im Hinblick auf den aktiven Zustand des Bremsregelsystems die maximal mögliche Bremskraft bereits wirkt (vgl. grau ausgefüllter linker Balken).

Diese erfindungsgemäße Anzeige informiert den Fahrer umfassend über die momentane Wirkung der Bremsanlage.

## Patentansprüche

1. Fahrzeug mit einer Vorrichtung zur Visualisierung des aktiven Zustands eines Bremsregelsystems, die eine Anzeige im sichtbaren Bereich des Fahrers zur Information über eine momentane Wirkung einer Bremsanlage umfaßt,
dadurch gekennzeichnet,
daß als Anzeige eine vergleichende Anzeige (2) einer der momentan maximal möglichen Bremskraft proportionalen Größe (F_{mög}) mit einer der tatsächlichen Bremskraft proportionalen Größe (Fᵢₛₜ) vorgesehen ist, wobei die momentan maximal mögliche Bremskraft unterhalb einer absolut maximal möglichen Bremskraft liegt und diese nur bei optimalen Reibwerten erreicht.

2. Fahrzeug nach Anspruch 1,
dadurch gekennzeichnet,
daß die der momentan maximal möglichen Bremskraft proportionale Größe (F_{mög}) variabel in Abhängigkeit von dem momentan ermittelten Reifen-Fahrbahn-Reibwert bestimmt wird.

## Claims

1. A vehicle comprising a device for optically indicating when a brake control system is in operation, comprising a display means within sight of the driver for informing him when the brake system is in operation at any moment,
characterised in that
the display means (2) shows a quantity (F_{mög}) proportional to the maximum possible brake force at any moment compared with a quantity (Fᵢₛₜ) proportional to the actual brake force, wherein the maximum possible brake force at any moment is below an absolute maximum possible brake force, which is reached only at optimum friction.

2. A vehicle according to claim 1, characterised in that the quantity (F_{mög}) proportional to the maximum possible brake force at any moment is determined by various means in dependence on the friction between the tyres and the road measured at any moment.

## Revendications

1. Véhicule équipé d'un dispositif de visualisation de l'état actif d'un système de contrôle de frein qui comprend un afficheur dans le champ de vision du conducteur pour l'informer de l'effet instantané d'une installation de frein,
caractérisé en ce que
• l'afficheur est un affichage de comparaison (2) d'une grandeur (Fₚₒₛₛ) proportionnelle à la force de frein maximale possible instantanément, et d'une grandeur (Fᵣₑₑₗ) proportionnelle à la force de frein réelle, et
• la force de frein maximale possible instantanément est située en dessous de la force de frein maximale possible dans l'absolu et n'atteint celle-ci que pour des coefficients d'adhérence optimum.

2. Véhicule selon la revendication 1,
caractérisé en ce que
la grandeur (Fₚₒₛₛ) proportionnelle à la force de frein maximale possible instantanément est définie de manière variable selon le coefficient d'adhérence pneumatique/chaussée, déterminé de façon instantanée.
